# EUROPÄISCHE PATENTSCHRIFT

(11) **EP 2 226 194 B1**
(45) Veröffentlichungstag und Bekanntmachung des Hinweises auf die Patenterteilung: **10.07.2013**
(21) Anmeldenummer: 09007028.5
(22) Anmeldetag: 13.08.2009
(51) Int. Cl.: B41F 33/00

(54) **Ferndiagnose- und Wartungsvorrichtung und Ferndiagnose- und Wartungsverfahren einer Maschine**
Remote diagnosis and maintenance device and method for a machine
Dispositif de diagnostic à distance et d'entretien ainsi que procédé de diagnostic à distance et d'entretien d'une machine

(30) Priorität: 04.03.2009 EP 09154349
(43) Veröffentlichungstag der Anmeldung: 08.09.2010
(73) Patentinhaber: Windmöller & Hölscher KG, 49525 Lengerich (DE)
(72) Erfinder: Brönstrup, Christian, 49545 Tecklenburg (DE); Brüggemann, Thomas, 49477 Ibbenbüren (DE)
(74) Vertreter: Vogel, Andreas

(56) Entgegenhaltungen:
- DE-A1- 19 961 995
- DE-A1-102007 027 727

## Beschreibung

Die Erfindung betrifft eine Maschine nach dem Oberbegriff des Anspruchs 11, eine Ferndiagnose und Wartungsvorrichtung nach dem Oberbegriff des Anspruchs 12, ein System zur Ferndiagnose und Wartung nach dem Oberbegriff des Anspruchs 13 sowie ein Ferndiagnose- und Wartungsverfahren nach dem Oberbegriff des Anspruchs 1.

Die Wartung von Maschinen "vor Ort", d.h. beim Maschinenbetreiber, ist aufwändig und verursacht teure Serviceeinsätze von qualifizierten Servicetechnikern. Daher gewinnt die Fernwartung von Maschinen und Anlagen über ein Ferndiagnosezentrum immer mehr an Bedeutung.

Maschinen werden über so genannte Leitstände gesteuert bzw. betrieben. Leitstände von Maschinen enthalten Leitstandsrechner, welche mit den Steuereinheiten der Maschinen verbunden sind, und Monitore, auf welchen beispielsweise die Betriebszustände der Maschine vom Maschinenbediener beobachtet werden können. Derzeit sind die Leitstandsrechner von Maschinen, insbesondere von Druck-, Extrusions- und Verpackungsmaschinen oft mit ISDN-Schnittstellen ausgestattet. Auch die Rechner der zentralen Ferndiagnosezentren der Maschinenhersteller verfügen über ISDN-Schnittstellen und Modems. Bei einer Verbindung des Leitstandsrechners mit einem Rechner des Ferndiagnosezentrums, welches weit entfernt vom Maschinenstandort sein kann, wird dem Servicepersonal bzw. dem Servicetechniker ein Zugriff auf den Leitstandsrechner einer zu wartenden Maschine ermöglicht. Dies geschieht mithilfe von Fernwartungsprogrammen, welche es dem (entfernt sitzenden) Servicetechniker ermöglichen, direkt auf den Leitstandsrechner der Maschine zuzugreifen und die Maschine zu warten und/oder fernzusteuern.

Bei den Fernwartungsprogrammen handelt es sich um so genannte Remote-Programme. Mit diesen Programmen ist es möglich, den Leitstandsrechner mit einem Rechner des Ferndiagnosezentrums fernzusteuern.

Bei einer Wartung werden von dem Leitstandsrechner der Maschine Informationen zum Betrieb derselben an das Ferndiagnosezentrum geleitet. Bei einer Remote-Verbindung bedeutet dies, dass Informationen vom Ferndiagnoserechner am Leiststandrechner der Maschine abgefragt werden. Bei diesen Informationen kann es sich um alle Daten handeln, die elektronisch auf dem Leitstandsrechner vorliegen und/oder von dem Leitstandsrechner an der Maschine abgefragt werden können. Bei diesen Daten handelt es sich in der Regel um Signal- und/oder Spannungsdaten von Steuerungselementen bzw. Steuereinheiten der Maschine. Beispielsweise kann es sich bei diesen Daten um die Maschinen- bzw. Produktionsgeschwindigkeit handeln.

In der Regel wird eine Verbindung des Leitstandsrechners der Maschine mit dem Ferndiagnosezentrum über das Internet erfolgen. Über eine solche Internetverbindung können die Informationen zwischen Maschine und Ferndiagnosezentrum elektronisch über eine große Distanz ausgetauscht werden. Dabei ist es egal in welcher Entfernung sich das Ferndiagnosezentrum vom Maschinenstandort befindet. Der Begriff "große Distanz" ist dabei nicht quantitativ zu verstehen. Mit "großer Distanz" ist gemeint, dass Informationen über eine beliebige elektronische Verbindung (Internetserver, WLAN, UMTS, etc.) ausgetauscht werden. Eine "große Distanz" kann auch bedeuten, dass sich das Ferndiagnosezentrum im Nachbargebäude oder gar im Nachbarraum befindet.
In der Regel wird mit großer Distanz jedoch ein anderes Betriebsgelände, oft in einer anderen Stadt oder in einem anderen Land gemeint sein.

Ein Ferndiagnosezentrum eines Maschinenherstellers umfasst in der Regel Rechner und Audio- sowie Videosysteme. Die oben beschriebenen Informationen zum Betrieb der Maschine können von den Rechnern des Ferndiagnosezentrums verarbeitet werden. Dazu sind die Rechner mit Programmen ausgestattet, die aus diesen Informationen Anweisungen zum Betrieb der Maschine berechnen bzw. geben können. Bei den Anweisungen kann es sich beispielsweise um die Empfehlung zum Austausch eines defekten Bauteils oder um die Änderung von Maschinenparametern wie die Geschwindigkeit handeln. Es ist aber auch denkbar, dass das Ferndiagnosezentrum den Leitstandsrechner lediglich mit einem Softwareupdate versorgt.

In der Regel wird sich das Ferndiagnosezentrum am Standort des Maschinenherstellers befinden. Im Sinne dieser Patentanmeldung kann eine Kombination aus Servicetechniker und Servicefahrzeug, welches mit dem nötigen Ferndiagnoseequipment ausgestattet ist, auch als Ferndiagnosezentrum verstanden werden.

Die Patentschrift EP 1 155 851 B1 zeigt eine Druckmaschine, die über einen Leitstand verfügt, der mit einem Rechner mit integrierter ISDN-Schnittstelle und einem Video- und Audioarbeitsplatz ausgestattet ist. Über eine ISDN-Leitung kann der Leitstand mit einem Ferndiagnosezentrum über eine Remote-Verbindung verbunden werden. Dazu verfügt auch das Ferndiagnosezentrum über geeignete Rechner mit ISDN-Schnittstellen. Auch das Ferndiagnosezentrum verfügt über ein Video- und Audiosystem. Da die ISDN-Verbindung als Mehrkanalleitung ausgebaut ist, kann - bei einer Verbindung des Leitstands der Druckmaschine und des Ferndiagnosezentrums - ein Kanal für die Wartung und ein anderer Kanal für die Audio- und Videoübertragung genutzt werden.

Als nachteilig erweist sich allerdings, dass der Datenaustausch des Leitstandsrechners und des Ferndiagnoserechners über eine Remote-Verbindung erfolgt. Der Datenaustausch ist einseitig, da alle Informationen vom Ferndiagnoserechner am Leitstandsrechner abgefragt werden müssen. Dadurch kann es vorkommen, dass wichtige Informationen vom Ferndiagnosemitarberter übersehen werden und die Fernwartung der Maschine fehlschlägt. Dann muss ein teurer Vor-Ort-Service erfolgen.

Ferner ist aus der Patentanmeldung EP 1 420 316 A1 ein System zur Ferndiagnose und Wartung einer Maschine, beispielsweise einer Herstellungsanlage oder einer Automatisierungsanlage bekannt, welches ein Instant-Messaging-System zur Kommunikation zwischen den Teilnehmern offenbart. Auch die Schriften WO 2006/074040 A2 und WO 01/82088 A2 offenbaren ebenfalls ein System zur Ferndiagnose und Wartung, welches ein Instant-Messaging-System zur Kommunikation nutzt. Derartige industriellen Ferndiagnose- und Wartungssysteme können zum Austausch von Informationen bzw. Anweisungen noch weiter optimiert werden.

Die Aufgabe der vorliegenden Erfindung ist es daher, eine zuverlässigere und optimale Maschinenwartung zu ermöglichen.

Erfindungsgemäß wird diese Aufgabe durch die Merkmale der kennzeichnenden Teile der Ansprüche 1, 11, 12 und 13 gelöst.

Demnach wird - bei der Wartung von Maschinen - zum Austausch von Informationen und/oder Anweisungen ein Instant-Messaging-System verwendet, wobei am Austausch zumindest ein Botprogramm teilnimmt.

Das Instant Messaging-System umfasst ein Datenübermittlungsprogramm. Dieses Programm ist jeweils auf den zu verbindenden Rechnern installiert. Die Verbindung der betreffenden Rechner kann direkt oder über einen Server erfolgen. Mithilfe des Instant Messaging-Systems können Informationen bzw. Datenpakete zwischen so genannten Teilnehmern, die Zugriff auf die verbundenen Rechnern haben, in beiden Richtungen gleichberechtigt ausgetauscht bzw. übermittelt werden. Ein Teilnehmer kann eine Person, beispielsweise ein Servicetechniker, oder auch ein autonom agierendes Programm sein. Wenn von einem Teilnehmer - über das Instant Messaging-System - Daten versendet werden, ist der verbundene Rechner zur gleichen Zeit empfangsbereit. Ein solcher Datenaustausch unterscheidet das Instant Messaging-System beispielsweise von einfachen E-Mail-Systemen. Das Instant Messaging System umfasst außerdem ein so genanntes Remote-Desktop-Programm. Mit einem solchen Programm kann ein Rechner von einem anderen (weit entfernten) Rechner ferngesteuert werden. In der Regel wird ein Rechner des Ferndiagnosezentrums einen Leitstandsrechner einer zu wartenden Maschine mit diesem Programm fernsteuern.

Bei modernen Maschinen wird ein Alarmsignal erzeugt, wenn ein Fehler auftritt. Um eine Fehlfunktion einer Maschine möglichst schnell beheben zu können, ist vorteilhaft, wenn in dem Ferndiagnosezentrum eine Information von der Fehlfunktion der Maschine eingeht. Erfahrene Maschinenbediener können in der Regel die notwendigen Informationen sammeln bzw. erzeugen und diese dann über das Instant Messaging-System an das Ferndiagnosezentrum übermitteln.

Die Einleitung der Fehlerbehebung kann auf zumindest zweierlei Weise erfolgen. Wenn der Maschinenführer einen Fehler an einer Maschine entdeckt, kann er das Ferndiagnosezentrum - durch Übersenden von Informationen zu diesem Fehler - darüber informieren. Es ist aber auch möglich, dass Informationen über den Zustand der Maschine vom Ferndiagnosezentrum abgefragt werden, und dabei ein Maschinenfehler entdeckt wird. Eine regelmäßige Abfrage von Informationen über den Zustand der Maschine vom Ferndiagnosezentrum aus, kann zum Erhalt eines guten Maschinenzustands durchaus vorteilhaft sein.

Die Leitstandsrechner und/oder die Steuereinheiten der betreffenden Maschinen können erfindungsgemäß mit so genannten Bots ausgerüstet sein, die die notwendigen Informationen über die Fehlfunktion der Maschine generieren.

Bei den Bots handelt es sich um Computerprogramme, die auf Rechnern installiert sind. Diese Programme laufen auf den Rechnern weitgehend autonom und arbeiten ständig gleiche, sich wiederholende Aufgaben bzw. Befehlsfolgen ab. Beispielsweise können Bots eingesetzt werden, um Maschinenparameter abzufragen und/oder um Fehlfunktionen bei Maschinen (frühzeitig) zu erkennen.

Auf dem Leitstandsrechner und/oder den Steuereinheiten einer Maschine können Bots eingesetzt werden, die die Betriebsparameter der Maschine ständig überwachen. In der Regel wird der Leitstandsrechner der Maschinen mit einem so genannten Maschinen-Bot ausgerüstet sein, der Informationen (Betriebszustände, Fehler) über die Maschine einsammelt. Auch die Steuereinheiten der Maschine können Maschinen-Bots umfassen. Diese Bots können die Betriebszustände der einzelnen Steuereinheiten überwachen und Informationen darüber an den Maschinen-Bot des Leitstandsrechners übermitteln. Vorteilhafterweise laufen alle Informationen - die von den Bots und/oder dem Maschinenführer erzeugt werden können - auf dem Leitstandsrechner zusammen.

Es ist vorteilhaft, wenn bei auffälligen Betriebsparametern, das heißt bei Betriebsparametern, die von Normalbetriebsparametern (Normalwerten) abweichen, die Bots diese Informationen (Abweichungen von den Normalwerten) selbständig dem Ferndiagnosezentrum übermitteln. Die Bots vergleichen in diesem Fall Sollbetriebsparameter (Sollwerte) mit Istbetriebsparametern (Istwerte). Bei der Übermittlung der Informationen erzeugt das Bot-Programm vorteilhafterweise gleichzeitig ein Signal, das dem Maschinenführer die Unregelmäßigkeit an der Maschine bzw. den Maschinenfehler mitteilt. Bei dem Signal kann es sich um eine einfache Mitteilung handeln, die auf dem Monitor des Leitstandsrechners erscheint. Die Mitteilung kann Informationen über den vorliegenden Maschinenfehler und eine Empfehlung enthalten, ob und evtl. wie die Maschine weiterbetrieben werden darf. Bei einer frühzeitigen Fehlerdiagnose können Maschinenfehler teilweise bereits vor ihrer Entstehung vermieden und/oder sehr schnell behoben werden.

Bots können auf den Steuereinheiten und/oder den Leitstandsrechnern der Maschine installiert sein. Vorteilhafterweise sammeln die Bots auf den Steuereinheiten Informationen über einen speziellen (abgegrenzten) Bereich der Maschine, den sie überwachen, und übersenden diese Informationen an den Bot des Leitstandsrechners. Beim Bot des Leitstandsrechners laufen demnach die Informationen zusammen.

Es kann auch vorteilhaft sein, wenn Bots, die auf den Steuereinheiten der Maschine installiert sind, direkt Informationen über einen Maschinenfehler an das Ferndiagnosezentrum übermitteln. In diesem Fall würden die Informationen nicht zunächst vom Bot auf dem Leitstandsrechner entgegengenommen.

Eine besonders bevorzugte Ausgestaltung der Erfindung beinhaltet, dass von dem Ferndiagnosezentrum Informationen zu einer Fehlfunktion eingeholt werden. Nachdem der Maschinenführer oder der Maschinen-Bot Informationen zu einer Fehlfunktion der Maschine an das Ferndiagnosezentrum übermittelt hat, können - über die bereits bestehende Instant Messaging-Datenverbindung des Diagnosezentrums mit dem Leitstandsrechner der Maschine - weitere Informationen zu der Fehlfunktion der Maschine von dem Ferndiagnosezentrum abgefragt werden. Der Maschinenfehler kann so weiter spezifiziert werden.

Es kann auch vorteilhaft sein, dass von einem Rechner des Ferndiagnosezentrums eine Verbindung mit dem Leitstandsrechner und/oder der Steuereinheit der Maschine aufgebaut wird und Informationen - beispielsweise über die aktuellen Betriebsparameter - der Maschine eingeholt werden, ohne dass zuvor ein Maschinenfehler vom Maschinenführer oder dem Maschinen-Bot erkannt worden ist. Diese Abfrage kann - beispielsweise vom Ferndiagnosezentrum aus -, in regelmäßigen oder unregelmäßigen Zeitabständen erfolgen.

In einer besonders vorteilhaften Ausführungsform der Erfindung ist auf dem Rechner des Ferndiagnosezentrums ebenfalls ein Bot-Programm installiert. Dieses Bot-Programm wird auch als Vermittlungs-Bot bezeichnet. Der Vermittlungs-Bot nimmt die Informationen über die Fehlfunktion der Maschine - vom Maschinen-Bot und/oder dem Maschinenführer - entgegen und vergleicht diese Informationen mit dem Profil eines Ferndiagnosemitarbeiters im Ferndiagnosezentrum. Anhand dieses Profil-Vergleichs übermittelt der Vermittlungs-Bot die Informationen einem - speziell für dieses Problem - besonders geeigneten Ferndiagnosemitarbeiter.

Der Ferndiagnosemitarbeiter kann ein Servicetechniker sein. In dieser Schrift werden die Begriffe Ferndiagnosemitarbeiter und Servicetechniker gleichbedeutend verwendet.

Falls der Mitarbeiter nicht erreichbar ist, weil er beispielsweise gerade ein anderes Maschinenproblem einer anderen Maschine bearbeitet, kann der Mitarbeiter von dem Vermittlungs-Bot - beispielsweise über eine Email - über das Maschinenproblem informiert werden und kann das Problem bzw. die Aufgabe anschließend abarbeiten.

Vorteilhafterweise überprüft der Vermittlungs-Bot, ob ein Mitarbeiter bereits in einer Instant-Messaging-Sitzung involviert ist. Ist dies der Fall kann der Vermittlungs-Bot einen anderen Service-Mitarbeiter, der ebenfalls für die Bearbeitung des bestehenden Maschinenfehlers geeignet ist, auswählen.

Vorteilhaft ist auch, wenn an der Spezifizierung des Maschinenfehlers nur die Bot-Programme beteiligt sind. In diesem Fall wird der bereits bestehende (oder nahende) Maschinenfehler von dem Maschinen-Bot entdeckt und dem Vermittlungsbot des Ferndiagnosezentrums übermittelt. Wenn dem Vermittlungs-Bot noch weitere Informationen über den Maschinenfehler fehlen, kann dieser eine Anfrage an den Maschinen-Bot senden. Anschließend fragt der Maschinen-Bot die gewünschten Informationen an der Maschine ab und übermittelt diese dem Vermittlungsbot. So kann der Vermittlungs-Bot den Maschinenfehler möglichst genau erfassen und einen geeigneten Servicetechniker (Ferndiagnosemitarbeiter) auswählen. Wie oben beschrieben kommunizieren zur Maschinenfehlerspezifizierung zumindest zwei Bots untereinander. Ist dies der Fall spricht man von einem Botnet. Zur Übertragung der ausgetauschten Daten bzw. Informationen wird vorteilhafterweise ein oben bereits beschriebenes Instant-Messaging-System verwendet.

Es ist ebenfalls vorteilhaft, wenn neben den Bots (Maschinen-Bot und/oder Vermittlungs-Bot) auch ein Mitarbeiter des Ferndiagnosezentrums und/oder ein Maschinenführer an einer Instant-Messaging-Konferenz teilnimmt und alle Teilnehmer (Maschinenführer, Mitarbeiter und Bots) Informationen austauschen, um den Maschinenfehler zu beheben.
In der Regel wird zunächst der Maschinenführer einen Fehler an der Maschine feststellen und diesen (Fehler) über ein Instant-Messaging-Sytem an das Ferndiagnosezentrum des Maschinenherstellers übermitteln. Diese Informationen werden von dem Vermittlungs-Bot des Ferndiagnosezentrums entgegen genommen und verarbeitet. Reichen die Informationen aus, um den Fehler zu beschreiben, wird vom Vermittlungs-Bot ein geeigneter Ferndiagnosemitarbeiter (Servicetechniker) ausgewählt, der den Fehler beheben soll. Wenn die Informationen über den Maschinenfehler noch nicht ausreichen, übersendet der Vermittlungs-Bot eine Frage an den Maschinen-Bot, der anschließend die angefragten Informationen an den Vermittlungs-Bot schickt. Mit diesen ergänzenden Informationen wählt der Vermittlungs-Bot jetzt einen Ferndiagnosemitarbeiter (Servicetechniker) aus, der geeignet ist, das Maschinenproblem zu lösen. Während die Bots - innerhalb eines Botnets - kommunizieren, ist parallel eine Kommunikation zwischen beispielsweise dem Maschinenführer und dem Servicetechniker möglich. Der Informationsaustausch der Bots läuft im Hintergrund weiter (Botnet).

Wie bereits oben beschrieben erfolgt der Informationsaustausch zwischen den einzelnen Teilnehmern (Maschinenfüher, Servicetechniker, Bot) über ein Instant-Messaging-System. Alle Teilnehmer der Instant-Messaging-Konferenz befinden sich in einem so genannten Chatraum. Innerhalb dieses Chatraums können alle Teilnehmer gleichberechtigt Textnachrichten (Chat) und/oder Informationen (Dateien, Daten, Bilder, etc.) austauschen. Außerdem verfügt das Instant-Messaging-System über eine so genannte Remote-Funktion, mit welcher beispielsweise ein Maschinenrechner von einem Recher des Ferndiagnosezentrums ferngesteuert werden kann. Die Übertragung aller Informationen (Textnachrichten, Dateien, Remote-Funktion) erfolgt dabei über so genannte Ports, die auf den verbundenen Rechnern durch das Instant-Messaging-System wechselseitig freigegeben werden. Die Ports stellen sozusagen einen Kanal für den Daten- bzw. Informationsaustausch dar.

Innerhalb der Instant Messaging-Konferenz können alle Konferenzteilnehmer untereinander und auch zeitgleich miteinander kommunizieren.

Auf dem Markt gibt es vielerlei solcher Instant-Messaging-Systeme. Beispielsweise sind Systeme wie ICQ, Skype oder Lotus Notes Sametime bekannt. All diese Systeme eignen sich als. Plattform für die in dieser Anmeldung beschriebene Fernwartung von Maschinen.

In einer vorteilhaften Ausführungsform der Erfindung kann der Vermittlungs-Bot direkt eine Anfrage über einen Maschinenfehler an den Maschinenführer senden. Dies ist der Fall, wenn beispielsweise die notwendigen Informationen nicht vom Maschinen-Bot erfasst werden, oder wenn diese Informationen über den Maschinenführer schneller erlangt werden können.

In einer weiteren vorteilhaften Ausführungsform der Erfindung kann der Vermittlungsbot eine Anfrage an den Maschinenführer schicken und um Zugriff auf den Leitstandsrechner der Maschine bitten. Diese Anfrage muss dann vom Maschinenführer bejaht werden, bevor der Vermittlungsbot Zugriff auf den Leitstandsrechner erlangt. Der Vermittlungs-Bot kann den Zugriff auf den Leitstandrechner der Maschine an den Servicetechniker abtreten. Die Fernsteuerung der Maschine erfolgt dann über die oben bereits erwähnte Remote-Desktop-Funktion des Instant-Messaging-Systems. Durch diese Anfrage kann aber auch eine Routinewartung einer Maschine gestartet werden.

Gegenstand der Erfindung ist außerdem eine Maschine, vorzugsweise Druck-Extrusions- oder Verpackungsmaschine, welche in der oben beschriebenen Weise mit einem Ferndiagnoseverfahren wartbar ist. Dazu verfügt die Maschine über Schnittstellen zu zumindest einem Kommunikationssystem (Instant Messaging-System), einem Leitstandsrechner und/oder eine Steuereinheit, welche(r) vorzugsweise mit einem Bot - zum Auslesen von Informationen zu Komponenten der Maschine ausgestattet ist (sind).

Ein weiterer Gegenstand der Erfindung beinhaltet eine Ferndiagnose- und Wartungseinrichtung zum Einsatz in einem Ferndiagnosezentrum zur Koordination des oben beschriebenen Maschinenwartungsverfahrens. Die Ferndiagnose- und Wartungseinrichtung umfasst Schnittstellen zu zumindest einem Kommunikationssystem (Instant-Messaging-System) und einen Rechner, der - vorzugsweise mit einem Bot - derart eingerichtet ist, dass er über das Instant-Messaging-System Informationen zu dem Betriebszustand von Maschinen empfängt und an Mitarbeiter des Ferndiagnosezentrums (Servicetechniker) weiterleitet.

Ein weiterer Gegenstand der Erfindung ist ein System zur Ferndiagnose und Wartung für eine Maschine, vorzugsweise eine Druck- Extrusions- oder Verpackungsmaschine, welches die oben beschriebene Maschine und das oben beschriebene Ferndiagnosezentrum umfasst.

Weitere Ausführungsbeispiele der Erfindung gehen aus der gegenständlichen Beschreibung und den Ansprüchen hervor.
Die einzelnen Figuren zeigen:
- Fig. 1: Eine Prinzipskizze eines Verfahrensablaufs zur Fernwartung von Maschinen
- Fig. 2: Eine weitere Prinzipskizze eines Verfahrensablaufs zur Fernwartung von Maschinen
- Fig. 3: Prinzipskizze einer Instant-Messaging-Konferenz zur Fernwartung von Maschinen

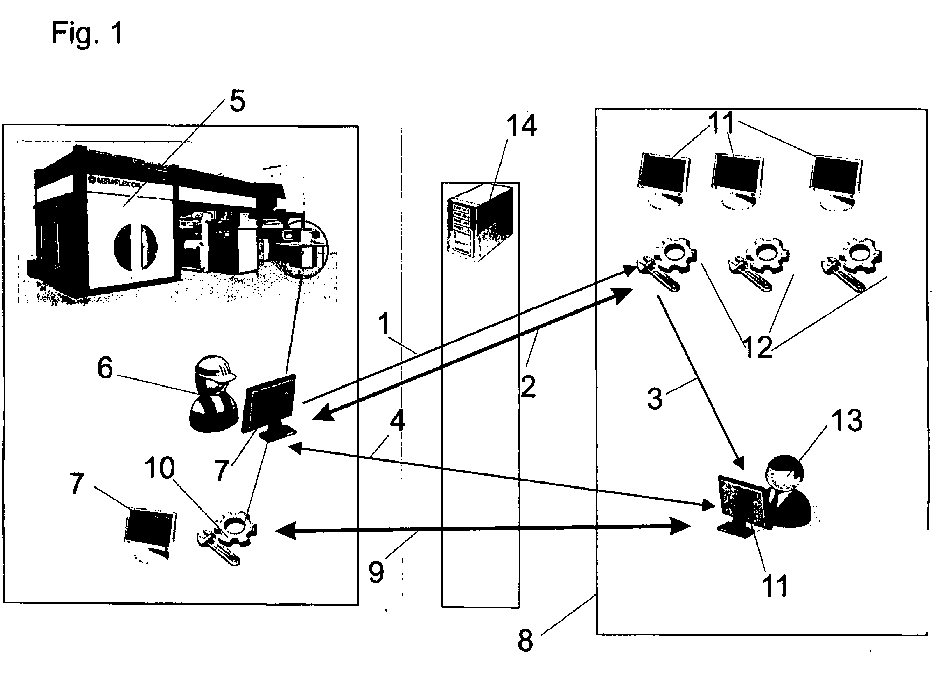

Fig. 1 zeigt eine Prinzipskizze eines Verfahrensablaufs zur Fernwartung von Maschinen.

Beim Auftreten eines Fehlers an einer Maschine 5 übersendet ein Maschinenführer 6 mithilfe des Leitstandsrechners 7 Informationen über den Fehler zu einem Ferndiagnosezentrum 8 des Maschinenherstellers. Die Übertragung der Informationen wird durch den Pfeil 1 dargestellt. Das Ferndiagnosezentrum 8 kann an einem von der Maschine beliebig weit entfernten Ort sein. Auf dem Leitstandsrechner ist eine Instant-Messaging-Kommunikationsplattform (Instant-Messaging-System) installiert. Der Leitstandsrechner 7 verfügt außerdem über geeignete Schnittstellen, um die obigen Informationen mithilfe des Instant-Messaging-System zu übertragen sowie über Audio- und Videoübertragungskomponenten.

Auf dem Leitstandsrechner 7 ist außerdem ein Maschinen-Bot 10 installiert. Die Bots 10, 12 sind in den Figuren abstrakt durch ein Symbol dargestellt. Das Bot-Programm 10 ist so programmiert, dass es selbständig die Betriebsparameter der Maschine 5 in bestimmten Zeitabständen überprüft. Entdeckt der Bot 10 eine Abweichung der ermittelten Betriebsparameter von Sollparametern (Normalparametern/Normalwerten), so kann der Bot 10 - unabhängig vom Maschinenführer 6 - Informationen über den (nahenden) Fehler an das Ferndiagnosezentrum 8 senden. In dem dargestellten Fall wird dem Maschinenführer 6 eine Nachricht vom Bot 10 übersendet. Diese Nachricht enthält in der Regel Informationen über den Fehler und Empfehlungen zum Weiterbetrieb der Maschine. Beispielsweise kann der Bot 10 empfehlen, die Maschine 5 mit einer geringeren Geschwindigkeit zu betreiben.

Der Bot 10 kann auch erst nach Auftauchen eines Maschinenfehlers mit dem Übersenden von Informationen an das Ferndiagnosezentrum 8 beginnen. Es ist auch denkbar, dass der Maschinenführer den Bot 10 erst nach Auftauchen eines Fehlers aktiviert und dieser erst dann mit dem Sammeln und anschließenden Übertragen der notwendigen Informationen beginnt.

Die Instant Messaging-Verbindung zwischen dem Leitstandsrechner 7 und der Ferndiagnosestation 8 kann direkt oder über einen Server 14 erfolgen.

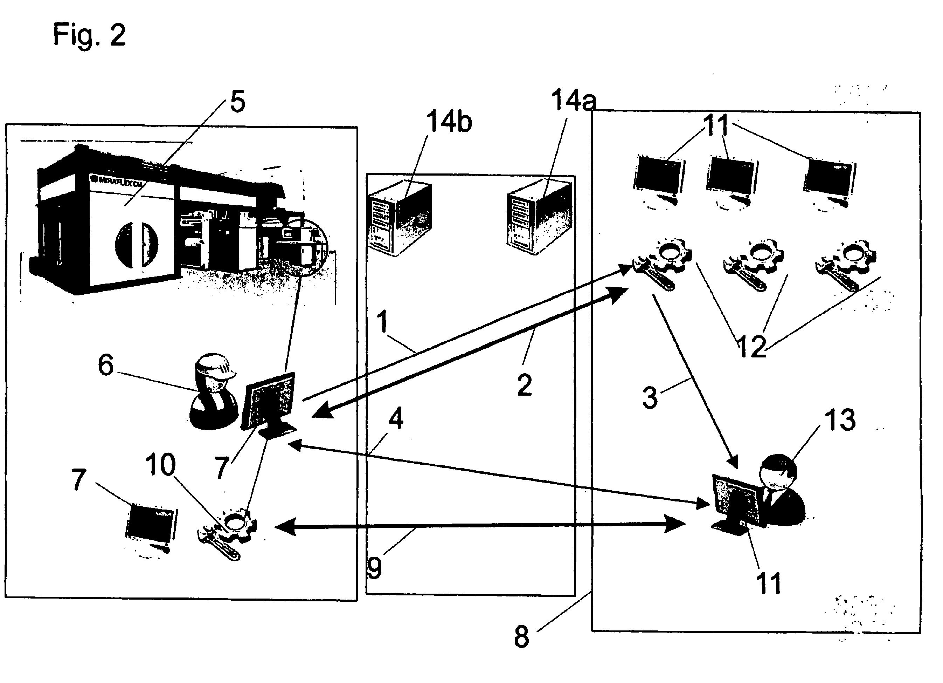

In der Regel wird das Ferndiagnosezentrum 8 des Maschinenherstellers über einen eigenen Server 14a verfügen, der mit dem Server 14b des Maschinenbetreibers über das Internet eine Verbindung aufbaut (Figur 2).

Das Ferndiagnosezentrum 8 umfasst Rechner 11, auf welchen 8 ebenfalls Bots 12 installiert sind. Außerdem umfasst jeder Rechner 11 Audio- und Videokommunikationshardware. Die Vermittlungs-Bots 12 werten die Informationen über den Maschinenfehler, die vom Maschinenführer 6 oder vom Bot 10 gesendet wurden, aus und gleichen den Fehler mit dem Profil eines Servicetechnikers 13 ab. Fehlen dem Bot 12 noch weitere Informationen über den Maschinenfehler, stellt der Vermittlungs-Bot 12 eine Anfrage an den Maschinen-Bot 10. Die Kommunikation der Bots 10 und 12 wird durch den Doppelpfeil 2 verdeutlicht. Ein Fachmann nennt diese Kommunikation Botnet. Anhand der weiteren Informationen ist der Bot 12 in der Lage einen für das spezielle Maschinenproblem geeigneten Servicetechniker 13 auszuwählen. Die Auswahl des Servicetechnikers 13 vom Bot 12 wird durch den Pfeil 3 dargestellt.

Wenn der Servicetechniker 13 die Informationen über den Maschinenfehler (vom Bot 12) empfängt, kann dieser 13 direkt mit dem Maschinenführer 6 - über den Leitstandsrechner 7 - Kontakt aufnehmen. Die Kommunikation zwischen Maschinenführer 6 und Servicetechniker 13 wird durch den Doppelpfeil 4 symbolisiert. Der Servicetechniker 13 hat aber auch die Möglichkeit weitere Informationen zu dem Maschinenfehler vom Maschinen-Bot 10 (Pfeil 9) abzufragen, bevor er 13 mit dem Maschinenführer 6 Kontakt aufnimmt (Pfeil 4). Es ist aber auch denkbar, dass der Techniker 13 dem Maschinen-Bot 10 Programmbefehle übermittelt, die den Maschinenfehler beheben, ohne dass der Maschinenführer 6 einbezogen werden muss. Alle Informationsflüsse 1,2,3,4 und 9, zwischen den Ferndiagnosezentren 8 des Maschinenherstellers und den Maschinen 5 des Kunden können während der Instant Messaging-Sitzung gleichzeitig und parallel erfolgen. So ist es beispielsweise möglich, dass über das Botnet von den Bots 10 und 12 Informationen (Daten) ausgetauscht werden, während gleichzeitig der Maschinenführer 6 mit dem Servicetechniker 13 kommuniziert. Über diese Instant Messaging-Verbindung ist es ebenfalls sehr leicht möglich, die Betriebssoftware der Maschine und/oder die Bot-Programme 10 zu aktualisieren (Update).

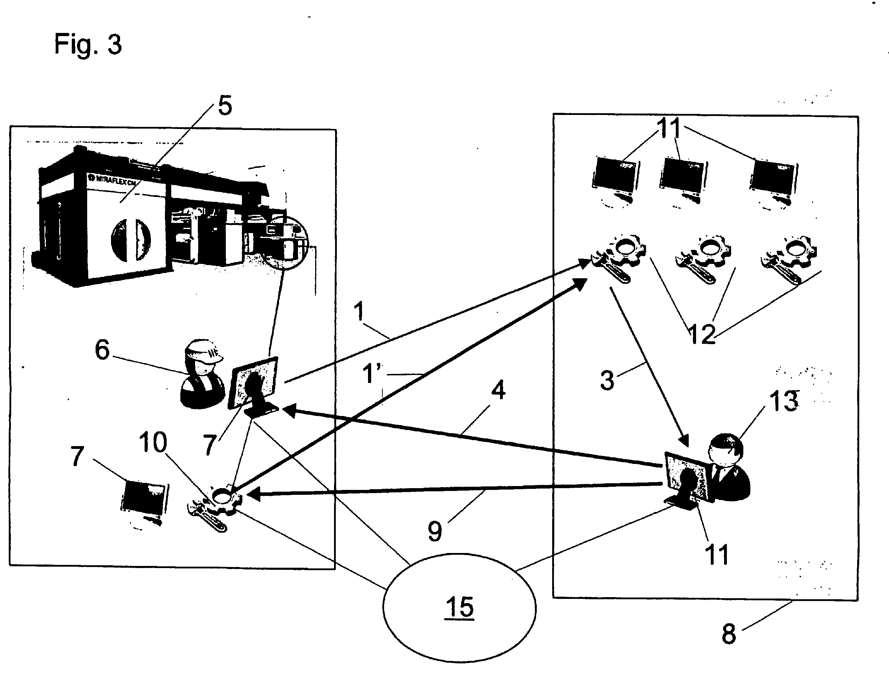

Figur 3 zeigt eine Prinzipskizze einer Instant-Messaging-Konferenz zur Fernwartung einer Maschine 5. Der Maschinenführer 6 übersendet Informationen über einen Maschinenfehler an das Ferndiagnosezentrum 8 (Pfeil 1). Alternativ kann der Maschinen-Bot 10 Informationen über einen Maschinenfehler an das Ferndiagnosezentrum senden (Pfeil 1'). Diese Informationen werden von dem Vermittlungs-Bot 12 in Empfang genommen (Pfeil 1). Der Bot 12 ist - aufgrund seiner Programmierung - in der Lage den Maschinenfehler zu bewerten und anhand dieser Bewertung einen geeigneten Servicetechniker 13 auszuwählen (Pfeil 3). Der Servicetechniker 13 kann - zur Fehlerbehebung - entweder direkt Informationen bzw. Anweisungen an den Maschinenführer 6 (Pfeil 4) oder den Maschinen-Bot 10 senden (Pfeil 9). Während dieser Instant-Messaging-Konferenz befinden sich alle Teilnehmer in einer Chatkonferenz bzw. in einem Chatraum. Die Chatkonferenz bzw. der Chatraum wird in der Figur 13 symbolhaft kreisförmig dargestellt und ist mit dem Bezugszeichen 15 versehen. Alle Teilnehmer, die sich in der Chatkonferenz 15 befinden, können gleichberechtigt Informationen austauschen.

| **Bezugszeichenliste** | |
|---|---|
| 1 | Pfeil |
| 2 | Doppelpfeil |
| 3 | Pfeil |
| 4 | Doppelpfeil |
| 5 | Pfeil |
| 6 | Maschinenführer |
| 7 | Leitstandsrechner |
| 8 | Ferndiagnosezentrum |
| 9 | Doppelpfeil |
| 10 | (Maschinen-)Bot, Bot-Programm |
| 11 | Rechner |
| 12 | (Vermittlungs-)Bot, Bot-Programm |
| 13 | Servicetechniker, Ferndiagnosearbeiter |
| 14 | Server |
| 15 | Chatkonferenz, Chatraum |

## Patentansprüche

1. Ferndiagnose und Wartungsverfahren für eine Maschine (5), vorzugsweise eine Druck-, Extrusions- oder Verpackungsmaschine,
- bei dem Informationen zum Betrieb der Maschine (5) in einem Femdiagnosezentrum (8) empfangen werden,
- und bei dem Anweisungen zum Betrieb der Maschine (5) von dem Ferndiagnosezentrum (8) an die Maschine gegeben werden,
- wobei der Austausch der Informationen und/oder Anweisungen elektronisch und über eine große Distanz erfolgt,
**dadurch gekennzeichnet, dass**
zum Austausch der Informationen und/oder Anweisungen ein Instant-Messaging-System verwendet wird, wobei am Austausch zumindest ein Botprogramm teilnimmt.

2. Verfahren nach dem vorstehenden Anspruch,
**dadurch gekennzeichnet, dass**
in dem Ferndiagnosezentrum (8) eine Information von einer Fehlfunktion einer Maschine (5) eingeht.

3. Verfahren nach einem der vorstehenden Ansprüche,
**dadurch gekennzeichnet, dass**
von dem Ferndiagnosezentrum (8) Informationen zu einer Fehlfunktion eingeholt werden.

4. Verfahren nach einem der vorstehenden Ansprüche,
**dadurch gekennzeichnet, dass**
In dem Ferndiagnosezentrum (8) ein Botprogramm (12) läuft, das erste Informationen zu der Art einer Fehlfunktion einer Maschine (5) entgegennimmt, diese Informationen mit dem Profil von Ferndiagnosemitarbeitern (13) vergleicht und anhand eines Bewertungsschemas einen Ferndiagnosemitarbeiter (13) auswählt.

5. Verfahren nach einem der vorstehenden Ansprüche,
**dadurch gekennzeichnet, dass**
das Ferndiagnosezentrum (8) Informationen empfängt, die ein Bot (10) von einem Leitstandsrechner (7) und/oder einer Steuereinheit einer Maschine (5) übernommen hat.

6. Verfahren nach zumindest einem der vorstehenden Ansprüche,
**dadurch gekennzeichnet, dass**
in dem Ferndiagnosezentrum (8) zumindest ein Bot (12) an dem Empfang der vorgenannten Informationen beteiligt ist.

7. Verfahren nach zumindest einem der vorstehenden Ansprüche,
**dadurch gekennzeichnet, dass**
in dem Ferndiagnosezentrum (8) ein Bot (12) und/oder ein Mitarbeiter (13) bei der Ausführung des Ferndiagnoseverfahrens an einer Instant-Messaging-Konferenz teilnimmt und in diesem Rahmen Informationen empfängt und/oder entgegennimmt.

8. Verfahren nach den Ansprüchen 5 bis 7,
**dadurch gekennzeichnet**
**dass** auch der Bot (12), der von dem Leitstandsrechner (7) und/oder der Steuereinheit der Maschine Informationen empfängt, an der Instant-Messaging-Konferenz teilnimmt.

9. Verfahren nach den Ansprüchen 5 und 7,
**dadurch gekennzeichnet**
**dass** auch zumindest ein Maschinenführer (6), der die Maschine (5) im Zugriff hat, an der Konferenz tellnimmt.

10. Verfahren nach einem der zwei vorstehenden Ansprüche,
**dadurch gekennzeichnet, dass**
alle vorgenannten Informationen im Rahmen der Instant Messaging-Konferenz übertragen werden.

11. Maschine (5), vorzugsweise Druck- Extrusions- oder Verpackungsmaschine, welche in Verbindung mit einem Ferndiagnoseverfahren wartbar ist,
welche über Schnittstellen zu zumindest einem Kommunikationssystem verfügt, **gekennzeichnet durch**
- eine Schnittstelle zu einem Instant Messaging-System
- und einen Leitstandsrechner (7) und/oder eine Steuereinheit, der/die mit einem Bot (10) zum Auslesen von Informationen zu Komponenten der Maschine (6), zum Zugriff auf ein Instant Messaging-System und zur Weiterleitung zumindest eines Teils der ausgelesenen Informationen - eingestellt ist.

12. Ferndiagnose- und Wartungseinrichtung zum Einsatz in einem Ferndiagnosezentrum (8), durch die vorzugsweise Druck- Extrusions- oder Verpackungsmaschinen untersucht und gewartet werden,
welche über Schnittstelle zu zumindest einem Kommunikationssystem verfügt, **gekennzeichnet durch**
- eine Schnittstelle zu einem Instant-Messaging-System
- und einen Rechner, der mit einem Bot (12) derart eingerichtet ist, dass er über das Instant-Messsging-System Informationen zu dem Betrieberustand von Maschinen (5) empfängt und an Mitarbeiter (13) des Ferndiagnosezentrums weiterleitet.

13. System zur Ferndiagnose und Wartung für eine Maschine (5), vorzugsweise eine Druck- Extrusions- oder Verpackungsmaschine, welches zumindest eine Maschine (5) und zumindest ein Ferndiagnosezentrum (8) umfasst
- wobei in dem Fendiagnosezentrum (8) Informationen zum Betrieb der Maschine (5) empfangbar sind,
- wobei von der Maschine (5) Anweisungen zum Betrieb derselben, die in dem Ferndiagnosezentrum (8) gegeben werden, an die Maschine gegeben werden, empfangbar sind,
- wobei der Austausch der Informationen und/oder Anweisungen elektronisch vornehmbar ist
- und zwischen der Maschine (5) und dem Ferndiagnosezentrum (8) eine große Distanz liegt,
**dadurch gekennzeichnet, dass**
der Austausch der Informationen und/oder Anweisungen mit einem Instant-Messaging-System vornehmbar ist, wobei am Austausch zumindest ein Botprogramm teilnimmt.

## Claims

1. Remote diagnostic and maintenance procedure for a machine (5), particularly a printing-, extrusion-, or packaging machine,
- by which information for the operation of the machine (5) is received in a remote diagnostics center (8),
- and by which instructions for the operation of the machine are transferred from the remote diagnostics center (8) to the machine,
- wherein the exchange of information and/or instructions occur electronically and via great distances,
**characterized in that**,
for the exchange of information and/or instructions an instant-messaging-system is used, wherein at least one bot program takes part in the exchange.

2. Method according to the preceding claim,
**characterized in that**,
in the remote diagnostics center (8) an information about a malfunction of a machine (5) is received.

3. Method according to one of the preceding claims,
**characterized in that**,
information regarding the malfunction are requested from the remote diagnostics center (8).

4. Method according to one of the preceding claims,
**characterized in that**,
a bot program (12) runs in the remote diagnostics center (8), which receives first information of a kind of a malfunction of a machine (5), compares these information with the profile of remote diagnostic technicians (13) and chooses a remote diagnostics technician (13) on the basis of an assessment scheme.

5. Method according to one of the preceding claims,
**characterized in that**,
the remote diagnostics center (8) receives information, which a bot (10) adopts from a control panel station (7) and/or a control unit of a machine (5).

6. Method according to one of the preceding claims,
**characterized in that**,
in the remote diagnostic center (8) at least one bot (12) is involved in the reception of said information.

7. Method according to one of the preceding claims,
**characterized in that**,
in the remote diagnostic center (8) a bot (12) and/or a technician (13) takes part in an instant-messaging-conference during the accomplishment of the remote diagnostic method and in this context receives and/or accepts information.

8. Method according to claims 5 to 7,
**characterized in that**,
also the bot (12) which receives information from the control panel station (7) and/or the control unit of the machine takes part in the instant-messaging-conference.

9. Method according to claims 5 and 7,
**characterized in that**,
also at least one machine operator (6), which has access to the machine (5), takes part in the conference

10. Method according to one of the two preceding claims,
**characterized in that**,
all said information are transferred on the basis of the instant-messaging-conference.

11. Machine (5), particularly printing-, extrusion- or packaging machine, which can be serviced in connection with a remote diagnostic method, which comprises interfaces to at least one communication system,
**characterized in that**,
- one interface to an instant-messaging-system
- and a control panel station (7) and/or a control unit, which is adjusted with a bot (10) for the read out of information of the components of the machine (5), for the access to an instant-messaging-system and for the transmission of at least a part of the read out information.

12. Remote diagnostic and maintenance mechanism for the operation in a remote diagnostic center (8), through which particularly printing-, extrusion- and packaging machines are assayed and serviced, which comprise interfaces at at least one communication system
**characterized in that**,
an interface to an instant-messaging-system
and a computer, which is established with a bot (12) in a way, that it receives information about the operating conditions of the machines (5) via the instant-messaging-system and forwards these information to an technician (13) of the remote diagnostic center.

13. System for the remote diagnostic and maintenance for a machine (5) particularly a printing-, extrusion-, or packaging machine, which comprises at least one machine (5) and at least one remote diagnostic center (8)
- wherein in the remote diagnostic center (8) information can be received about the operation of the machine (5),
- wherein the machine can receive instructions for the operation of the machine (5), which are established in the remote diagnostic center (8), and are transmitted to the machine
- wherein the exchange of information and/or instructions can be conducted electronically
- and between the machine (5) and the remote diagnostic center (8) is a large distance
**characterized in that**,
the exchange of information and/or instructions can be conducted with an instant-messaging-system, wherein at least one bot program takes part in the exchange.

## Revendications

1. Procédé de diagnostic à distance et d'entretien pour une machine (5), de préférence une machine d'impression, d'extrusion ou d'emballage,
- selon lequel des informations sur le fonctionnement de la machine (5) sont reçues dans un centre (8) de diagnostic à distance,
- et selon lequel des instructions pour le fonctionnement de la machine (5) sont envoyées par le centre (8) de diagnostic à distance à la machine,
- sachant que l'échange des informations et/ou instructions s'effectue électroniquement et sur une grande distance,
**caractérisé en ce qu'**on utilise pour l'échange des informations et/ou instructions un système de messagerie instantanée, sachant qu'au moins un programme bot participe à l'échange.

2. Procédé selon la revendication précédente, **caractérisé en ce qu'**une information d'un dysfonctionnement d'une machine (5) parvient au centre (8) de diagnostic à distance.

3. Procédé selon l'une des revendications précédentes, **caractérisé en ce que** le centre (8) de diagnostic à distance recueille des informations concernant un dysfonctionnement.

4. Procédé selon l'une des revendications précédentes, **caractérisé en ce qu'**un programme bot (12) tourne dans le centre (8) de diagnostic à distance, programme qui reçoit des premières informations concernant le type d'un dysfonctionnement d'une machine (5), compare ces informations au profil de collaborateurs (13) de diagnostic à distance et, à l'aide d'un schéma d'évaluation, sélectionne un collaborateur (13) de diagnostic à distance.

5. Procédé selon l'une des revendications précédentes, **caractérisé en ce que** le centre (8) de diagnostic à distance reçoit des informations qu'un bot (10) a lui-même reçu d'un ordinateur de poste de commande (7) et/ou d'une unité de commande d'une machine (5).

6. Procédé selon au moins une des revendications précédentes, **caractérisé en ce qu'**au moins un bot (12) participe à la réception des informations précitées dans le centre (8) de diagnostic à distance.

7. Procédé selon au moins une des revendications précédentes, **caractérisé en ce qu'**un bot (12) et/ou un collaborateur (13), lors de l'exécution du procédé de diagnostic à distance, participe dans le centre (8) de diagnostic à distance à une conférence par messagerie instantanée et reçoit et/ou réceptionne dans ce cadre des informations.

8. Procédé selon les revendications 5 à 7, **caractérisé en ce que** le bot (12), qui reçoit des informations de l'ordinateur de poste de commande (7) et/ou de l'unité de commande de la machine, participe également à la conférence par messagerie instantanée.

9. Procédé selon les revendications 5 et 7, **caractérisé en ce qu'**au moins un conducteur de machine (6), qui a accès à la machine (5), participe également à la conférence.

10. Procédé selon l'une des deux revendications précédentes, **caractérisé en ce que** toutes les informations précitées sont transmises dans le cadre de la conférence par messagerie instantanée.

11. Machine (5), de préférence machine d'impression, d'extrusion ou d'emballage,
qui peut être entretenue en liaison avec un procédé de diagnostic à distance,
qui dispose d'interfaces vers au moins un système de communication,
**caractérisée par**
- une interface vers un système de messagerie instantanée,
- et un ordinateur de poste de commande (7) et/ou une unité de commande, qui est réglé(e) par un bot (10) destiné à lire des informations concernant des composants de la machine (5), à accéder à un système de messagerie instantanée et à transmettre au moins une partie des informations lues.

12. Dispositif de diagnostic à distance et d'entretien à utiliser dans un centre (8) de diagnostic à distance, par lequel sont contrôlées et entretenues de préférence des machines d'impression, d'extrusion ou d'emballage,
qui dispose d'interfaces vers au moins un système de communication,
**caractérisé par**
- une interface vers un système de messagerie instantanée,
- et un ordinateur, qui est configuré par un bot (12) de telle sorte qu'il reçoit par l'intermédiaire du système de messagerie instantanée des informations concernant l'état de fonctionnement de machines (5) et les transmet à des collaborateurs (13) du centre de diagnostic à distance

13. Système de diagnostic à distance et d'entretien pour une machine (5), de préférence une machine d'impression, d'extrusion ou d'emballage, qui comprend au moins une machine (5) et au moins un centre (8) de diagnostic à distance,
- sachant que des informations concernant le fonctionnement de la machine (5) peuvent être reçues dans le centre (8) de diagnostic à distance,
- sachant que la machine (5) peut recevoir des instructions pour son fonctionnement, qui sont données à la machine dans le centre (8) de diagnostic à distance,
- sachant que l'échange des informations et/ou instructions peut être entrepris électroniquement,
- et qu'il existe une grande distance entre la machine (5) et le centre (8) de diagnostic à distance,
**caractérisé en ce que** l'échange des informations et/ou instructions peut être entrepris avec un système de messagerie instantanée, sachant qu'au moins un programme bot participe à l'échange.
